Europäisches Patentamt

European Patent Office

Office européen des brevets

(19)

(11) Veröffentlichungsnummer: **0 068 039**
**B1**

(12)

# EUROPÄISCHE PATENTSCHRIFT

(45) Veröffentlichungstag der Patentschrift: **20.01.88**

(51) Int. Cl.⁴: **F 03 G 3/00**, F 16 H 21/26

(21) Anmeldenummer: **81105014.5**

(22) Anmeldetag: **29.06.81**

(54) **Kraftübertragungssystem mit Hebelgestängen und Kurbelscheibe.**

(43) Veröffentlichungstag der Anmeldung:
**05.01.83 Patentblatt 83/01**

(45) Bekanntmachung des Hinweises auf die
Patenterteilung:
**20.01.88 Patentblatt 88/03**

(84) Benannte Vertragsstaaten:
**AT BE CH DE FR GB IT LI NL SE**

(56) Entgegenhaltungen:
**DE-A-1 650 689**
**DE-C- 456 717**
**US-A-2 571 153**
**US-A-3 693 463**
**F.D. JONES: "Ingenious mechanisms for designers and inventors", Band 1, 1930, The Industrial Press, Seiten 289-292 New York, U.S.A.**
**HORTON: "Ingenious mechanisms for designers and inventors", Band III, 1951, The Industrial Press, Seiten 233-234, 271-273 New York, U.S.A.**

(73) Patentinhaber: **Kohl, Franz**
**Alfred-Schindler-Strasse 30**
**CH-6030 Ebikon (CH)**

(72) Erfinder: **Kohl, Franz**
**Alfred-Schindler-Strasse 30**
**CH-6030 Ebikon (CH)**

(74) Vertreter: **Grieskamp, Johannes Peter**
**Patentanwaltsbüro Hannspeter Grieskamp Im**
**Baumgarten 7 Postfach**
**CH-8123 Ebmatingen (CH)**

(56) References cited:
**NICHOLAS P. CHIRONIS; Mechanism, Linkages and Mechanical Controls, 1965 McGraw - Hill Book Company, New York, Seite 154, Figur 6.**

Courier Press, Leamington Spa, England.

**Beschreibung**

Die Erfindung betrifft ein dynamisches Getriebe gemäss Oberbegriff des Patentanspruch 1.

Dynamische Getriebe mit Kurbelscheibe und Hebelgestänge werden für verschiedene Zwecke benötigt wie z.B. kurzzeitige Energieabgabe oder Ueberbrückung eines kurzzeitigen hohen Energiebedarfs.

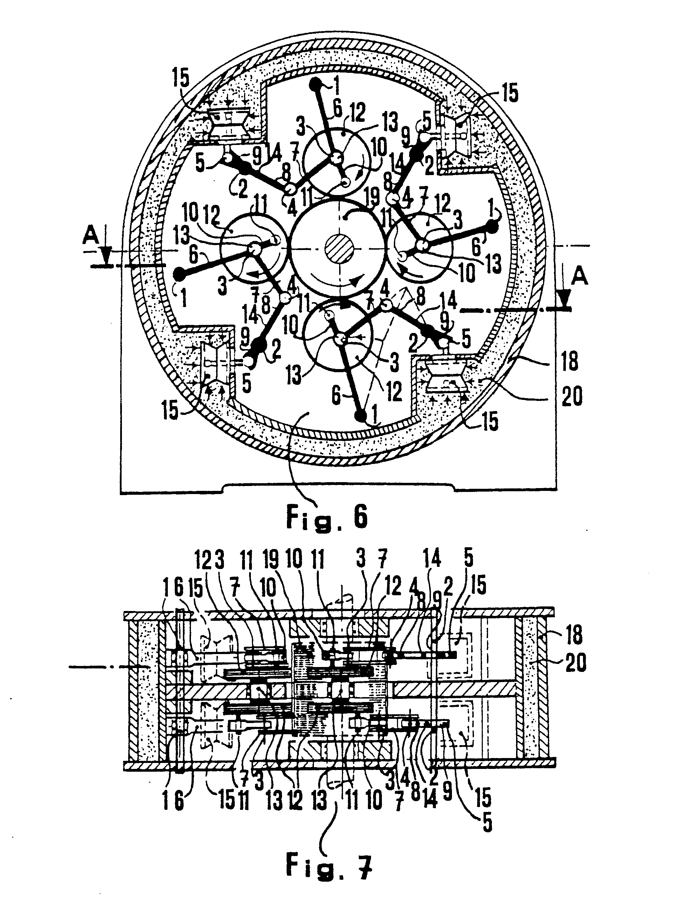

Bekannt ist ein Steinbrecher, der im Buch "Mechanism, Linkages and Mechanical Controls" von N. P. Chironis, 1965 McGraw-Hill Verlag, auf Seite 154 in Figur 6 beschrieben ist. Der Steinbrecher besteht aus einer angetriebenen Kurbelscheibe an der über einem Kurbeltrieb und Kniegelenk ein einarmiger Hebelarm zum Brechen von Steinen angebracht ist. Der Kraftfluss ist immer von der Kurbelscheibe zum steinbrechenden Hebelarm gerichtet.

Die Erfindung hat die Aufgabe, ein dynamisches Getriebe zu schaffen, das unter Zuhilfenahme eines Energiespeichers wechselweise einen Kraftfluss in die eine Richtung zur Kurbelscheibe und in die andere Richtung zum Energiespeicher gestattet.

Die Aufgabe wird durch die im kennzeichnenden Teil des Patentanspruchs 1 definierten Merkmale gelöst.

Ausführungsbeispiele der Erfindung werden anhand der Zeichnungen näher erläutert. Es zeigen:

Figur 1 das Grundelement der Erfindung,

Figur 2 eine erste Ausführungsform mit zwei Grundelementen in Schnittdarstellung,

Figur 3 eine zweite Ausführungsform mit der Anordnung mehrerer Grundelemente an einer Kurbelscheibe,

Figur 4 eine dritte Ausführungsform mit der Anordnung mehrerer Grundelemente,

Figur 5 eine Schnittdarstellung nach den Schnittlinien A—A der Figur 4,

Figur 6 eine vierte Ausführungsform mit der Anordnung mehrerer Grundelemente an einem gemeinsamen Abtrieb,

Figur 7 eine Schnittdarstellung der Anordnung der Figur 6 nach den Schnittlinien A—A,

Figur 8 eine Schnittdarstellung einer fünften Ausführungsform,

Figuren 9 & 10 zwei Ausführungsbeispiele des Energiespeichers,

Figur 11 eine Vereinfachung der in Figur 3 gezeigten zweiten Ausführungsform.

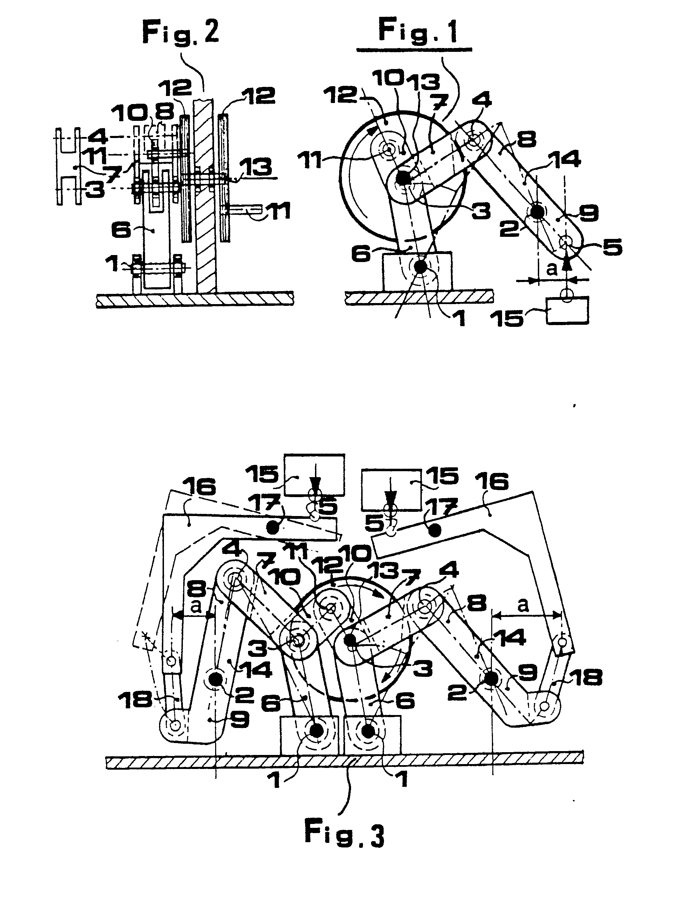

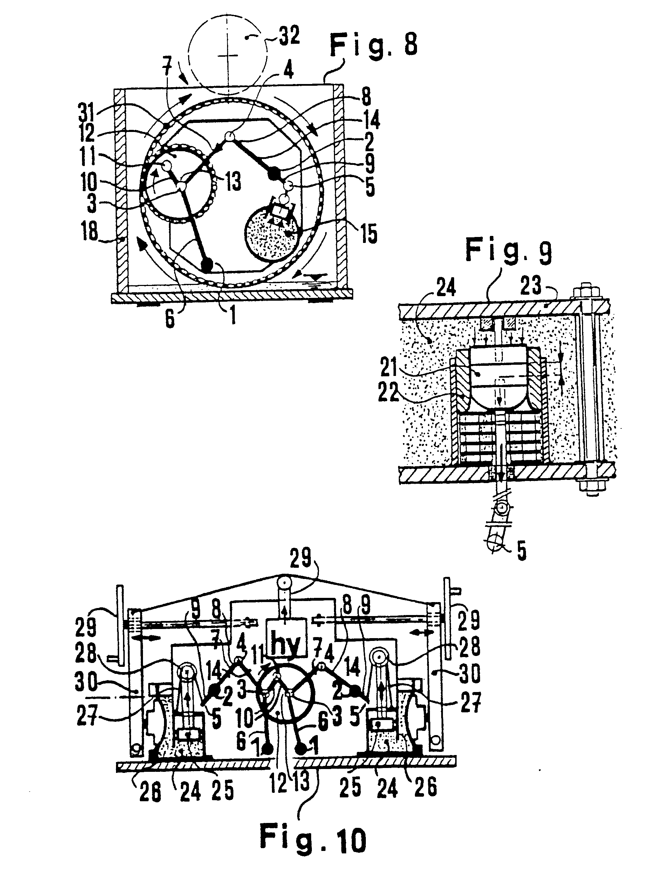

Die Figur 1 zeigt das Grundelement der Erfindung, das zu weiteren Ausführungsbeispielen kombiniert werden kann. Das Grundelement enthält mehrere Verbindungsstäbe 6, 7, 10, einen Hebel 14, die in bestimmter Weise zwischen den Fixpunkten 1, 2 und einer Kurbelscheibe 12 angeordnet sind. Die Verbindungsstäbe 6, 7, 10 sind im Gelenk 3 miteinander verbunden. Die anderen Seiten der Verbindungsstäbe sind am Fixpunkt 1, Kurbelzapfen 11 der um ihre Achse 13 sich drehenden Kurbelscheibe 12 und am Hebel 14 angelenkt, des sich um den anderen Fixpunkt 2 verschwenken kann. Der Hebel 14 hat zwei ungleich lange Hebelteile 8, 9. Das Ende 4 des einen Hebelstücks 8 ist angelenkt am Verbindungsstab 7. Dieser und die anderen Verbindungsstäbe 6, 10 sind als zwei Kniegelenke ausgebildet, welche so zueinander angeordnet sind, dass sie bei Uebergang der für Kniegelenke typischen gestreckten Stellung in die geknickte Stellung oder umgekehrt den Energiefluss pro Umdrehung der Kurbelscheibe 12 unterstützen. Der Energiespeicher 15 ist in der Figur 1 unterhalb des Endes 5 des Hebelteils 9 angeordnet. Er kann auch senkrecht über dem Ende 5 vorgesehen sein, wie Figur 3 zeigt. Als Energiespeicher kommen in Btracht: Zugund/oder Druckfedern, Pressluftkolben, pneumatische Membranen, Gewichte, hydraulische Speichermittel, Flüssigkeitsdruck oder Auftriebskrafte. Aus dieser Fülle der technischen Ausführungen werden anhand der Figuren 9 and 10 zwei Beispiele näher erklärt.

Die Figur 2 zeigt in teilweise geschnittener Darstellung ein erste Ausführungsbeispiel mit zwei Grundelementen der Figur 1. Die Kurbelscheiben 12 der beiden Grundelemente sind auf einer Drehachse 13 befestigt. Eine der beiden Kurbelscheiben dient als Abtrieb. Wegen der besseren Uebersicht ist nur ein Grundelement vollständig gezeichnet. Die Energiespeicher 15, die Hebel 14, Fixpunkte 2 sind nicht gezeichnet. Die beiden Kurbeltriebe 11 sind um 180° am Umfang der Kurbelscheibe 12 versetzt angeordnet. Es ist ohne weiteres möglich, die Anordnung der sogenannten Zwilling-Kurbelscheibe der Figur 2 in einer grösseren Anzahl nebeneinander zu vereinigen. Jede Zwilling-Kurbelscheibe ist mit der Nachbar-Zwilling-Kurbelscheibe über den entsprechenden Kurbelzapfen 11 verbunden, wobei der Kurbelzapfen jede Zwillings-Kurbelscheibe nach Art einer Kurbelwelle beim Verbrennungsmotor versetzt ist.

Figur 3 als zweite Ausführungsform zeigt die Anordnung zweier Grundelemente auf einer Seite der Kurbelscheibe 12. Die anderen beiden Grundelemente, die auf der anderen Seite derselben Kurbelscheibenachse angeordnet sind, wurden nicht gezeichnet.

Die auf einer Seite der Kurbelscheibe 12 angeordneten beiden Grundelemente sind mit einem einzigen Kurbelzapfen 11 gelenkig verbunden. Der vordere Kurbelzapfen 11 ist gegenüber den hinteren um ca. 180° auf dem Umfang der Kurbelscheibe 12 versetzt. Jedes der beiden auf einer Seite der Kurbelscheibe angeordneten Grundelemente arbeitet mit einem Energiespeicher 15 zusammen, sodass für die beiden Kurbelscheiben vier Energiespeicher vorgesehen sind. Jeder Energiespeicher 15 ist über ein Hebelgestänge 16, 18 mit dem Hebelteil 9 des Hebels 14 verbunden, welches Hebelgestänge am Fixpunkt 2 so gelagert ist, dass der Abstand a für jedes Grundelement ab-bzw. zunimmt. Die Arbeitsweise der Energiespeicher und die Aenderungen der Abstände a sind zueinander zeitlich versetzt.

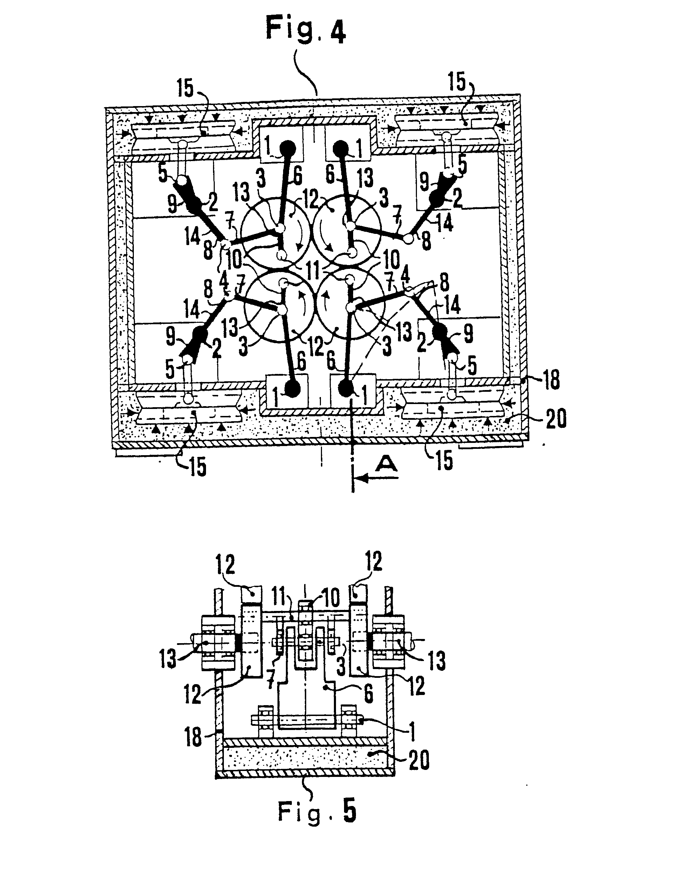

Die Figur 4 zeigt die dritte Ausführungsform der Erfindung, die darin besteht, dass vier Grundelemente auf einen gemeinsamen Abtrieb arbeiten. Im Unterschied zu den beiden Ausführungsbeispielen der Figuren zwei und drei hat jedes Grundelement der Figur 4 zwei Kurbelscheiben 12, wie die Schnittdarstellung der Figur fünf nach den Schnittlinien A—A zeigt. Die acht Kurbelscheiben 12 arbeiten zusammen, wobei nur ein Teil der acht Wellen 13 den gemeinsamen Abtrieb darstellen. Gemäss Figuren 4 und 5 sind in einem Doppelgehäuse 18 die Grundelemente mit ihren Verbindungsstangen 6, 7, 10, Hebeln 14 angeordnet. Jedes Grundelement hat seinen Energiespeicher 15, der am Ende 5 des Hebels 14 angreift. Der Energiespeicher ist als Balg aus gummielastischem Material ausgebildet, der zusammengedrückt und ausgedehnt wird. Die Bälge sind von einem gasförmigen bzw. flüssigen Medium 20 umgeben, welches auf sie einen Druck ausübt.

Die Figur 6 zeigt die vierte Ausführungsform der Erfindung mit acht Grundelementen, deren acht Kurbelscheiben 12 auf einen gemeinsamen Abtrieb 19 arbeiten. Die Bezugszahlen sind gleich wie bei den früheren Ausführungsformen.

Die Figur 7 ist die Schnittdarstellung der vierten Ausführungsform und soll die Uebertragung des Energieflusses zwischen Kurbelscheibe 12 und dem gemeinsamen Abtrieb 19 in einem runden Doppelgehäuse 18 zeigen, welches bekanntlich grössere Kräfte des gasförmigen oder flüssigen Mediums 20 aufnehmen kann. Die Energiespeicher 15 sind als Bälge ausgebildet und stehen unter Druck des gasförmigen oder flüssigen Mediums 20.

Figur 8 zeigt einen Schnitt durch die fünfte Ausführungsform der Erfindung, welche aus einer Anordnung von mehreren Grundelementen hintereinander innerhalb einer Trommel 31 besteht. Die Kurbelscheibe 12 eines jeden Grundelementes hat auf seinem Umfang eine Aussenverzahnung und arbeitet auf die Innenverzahnung der Trommel 31. Der Speicher 15, der am Ende 5 des Hebels 14 angreift, besteht aus einem Druckbehälter, welcher mit einem gasförmigen oder flüssigen Medium gefüllt sein kann. Die Kurbelzapfen 11 einer jeden Kurbelscheibe 12 sind in einer bestimmten Weise zueinander versetzt wie es bei Verbrennungsmotoren mit der Kurbelwelle üblich ist.

Die Figur 9 zeigt ein Ausführungsbeispiel des Energiespeichers 15 in Form eines Druckluftkolbens 21, der in einem Zylinder 22 beweglich geführt ist. Der in einem Gehäuse 23 angeordnete Druckkolben wird durch die Pressluft 24 nach unten in Pfeilrichtung bewegt und beeinflusst den Hebel 14 eines Grundelementes. Da die Pressluft 24 unter hohem Druck steht, hat der Druckluftkolben 21 eine lamellenartige Dichtung.

Die Figur 10 zeigt ein anderes Ausführungsbeispiel des Energiespeichers 15, der aus einem Kolben 25 besteht der durch ein unter Druck stehendes gasförmiges oder flüssiges Medium 24 in einem Zylinder 26 beweglich ist. Der Kolben 25 steht über einen Seilzug 27 mit Umlenkrolle 28 mit dem Ende 5 des Hebel 14 eines Grundelementes der Figur 1 in Verbindung. Der Druck des Mediums 24 kann mittels einer Verstelleinrichtung 29, 30 verändert werden, welche Verstelleinrichtung die Hebel 30 zur Druckerhöhung oder Druckerniedrigung in die eine oder andere Richtung bewegt. Dies kann entweder von Hand und/oder hydraulisch geschehen, was in der Figur 10 symbolisch dargestellt ist.

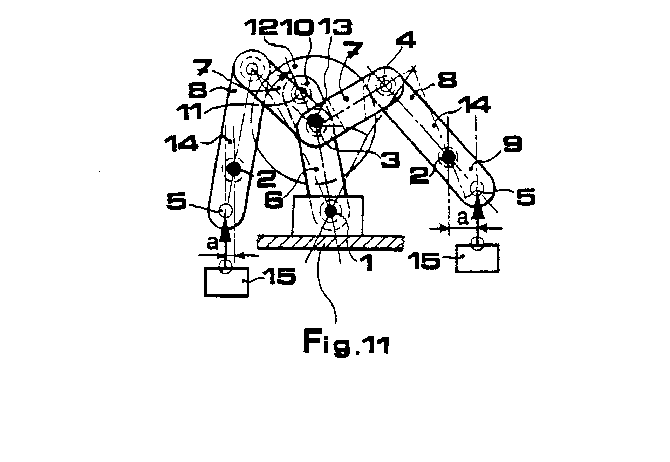

Die Figur 11 zeigt eine vereinfachte Konstruktion der zweiten Ausführungsform der Figur 3. Die beiden Grundelemente, die auf jeder Seite der Kurbelscheibe 12 angeordnet sind, werden an einem einzigen Fixpunkt 1 über gemeinsame Verbindungsstäbe 6, 10 angelenkt. Jedes Grundelement ist nach wie vor an seinem anderen Fixpunkt 2 angelenkt. Die Arbeitsweise der an jeder Kurbelscheibe 12 angelenkten Grundelemente ist gleich wie im Zusammenhang mit der Figur 3 beschrieben wurde. Die Energiespeicher 15 sind in der Figur 11 unterhalb des Hebelteiles 9 direkt am Ende 5 angelenkt. Mit der Figur 11 soll auch gezeigt werden, dass die einzelnen Ausführungsformen der Figuren 2 bis 8 konstruktiv geändert und die verschiedenen Energiespeicher, z.B. der Figuren 9 und 10, verwendet werden können.

## Patentansprüche

1. Dynamisches Getriebe, bestehend aus einer Kurbelscheibe (12), Verbindungsstäben (6, 7, 10) und einem Hebel (14), wobei ein erster Stab (6) mit einem Ende an einem Fixpunkt (1) und dem anderen Ende gemeinsam mit einem zweiten Stab (7) und einem dritten Stab (10) verbunden ist und der Stab (10) an seinem anderen Ende exzentrisch an der Kurbelscheibe (12) im Verbindungspunkt (11) gelagert ist und ferner das freie Ende des Stabes (7) an einem um einen Fixpunkt (2) drehenden Hebel (14) angelenkt ist, dadurch gekennzeichnet, dass dieser Fixpunkt (2) den Hebel (14) in zwei Hebelteile (8, 9) unterteilt, von denen das Ende (5) des einen Teils (9) mit einem Energiespeicher (15) und das Ende (4) des anderen Teils (8) mit dem einen Ende des zweiten Stabes (7) gelenkig verbunden ist, und dass dieser Stab (7) eines der Organe zur Uebertragung der Drehbewegung der Kurbelscheibe (12) in eine zyklische Wippbewegung des um den genannten anderen Fixpunkt (2) schwenkbaren Hebels (14) bildet derart, dass die Wirklinie der zwischen dem Energiespeicher (15) und dem einen Hebelteil (9) wirkenden Kraft einen variablen Abstand (a) vom genannten Fixpunkt (2) aufweist.

2. Dynamisches Getriebe nach Patentanspruch 1, dadurch gekennzeichnet, dass der Fixpunkt (2) den Hebel (14) in zwei ungleich lange Hebelteile (8, 9) unterteilt, von denen das Ende (5) des kürzeren Teils (9) mit dem Energiespeicher (15) und das Ende (4) des längeren Teils (9) mit dem einen Ende des zweiten Stabs (7) gelenkig verbunden ist.

3. Dynamisches Getriebe nach Patentanspruch 1, dadurch gekennzeichnet, dass die beiden am dritten Stab (10) angelenkten erste und zweite Stäbe (6, 7) ein Kniegelenk darstellen, welches während des Uebergangs von der gestreckten in die geknickte Lage den Kraftfluss vom Energiespeicher (15) zur Kurbelscheibe (12) unterstützt.

4. Dynamisches Getriebe nach Patentanspruch 1, dadurch gekennzeichnet, dass mindestens eine vom ersten Stab (6) Hebel (14) und vom dritten Stab (10) betätigte Kurbelscheibe (12) vorgesehen ist, wobei zwei und mehr Kurbelscheiben auf einem gemeinsamen Abtrieb (19) arbeiten. (Figuren 6, 7)

5. Dynamisches Getriebe nach Patentanspruch 1, dadurch gekennzeichnet, dass mehrere Kurbelscheiben (12), von denen jede durch ihre zugehörenden Stäbe (6, 10) Hebel (14) betätigt wird, miteinander verbunden sind und auf einen gemeinsamen Abrieb arbeiten. (Figuren 4, 5)

6. Dynamisches Getriebe nach Patentanspruch 1, dadurch gekennzeichnet, dass mehrere Kurbelscheiben (12), von denen jede durch ihre zugehörenden Stäbe (6, 10) Hebel (14) betätigt wird, auf eine Trommel (31) arbeiten, welche Trommel einen Abtrieb (32) bewegt. (Figur 8)

7. Dynamisches Getriebe nach Patentanspruch 1, dadurch gekennzeichnet, dass an einer Seite der Kurbelscheibe (12) mindestens zwei aus dem ersten und dritten Stab (6, 10), Hebel (14) bestehende Getriebeelemente angelenkt sind. (Figuren 3, 10)

8. Dynamisches Getriebe nach Patentanspruch 1, dadurch gekennzeichnet, dass an einer Seite der Kurbelscheibe (12) zwei Getriebeelemente angeordnet sind, die einen ersten Stab (6), einen dritten Stab (10) und zwei Hebel (14) enthalten. (Figur 11)

**Revendications**

1. Dispositif de transmission de force, composé d'une disque à manivelle, de barres de liaison (6, 7, 10) et d'un levier (14), une première barre (6) étant reliée, avec une de ses extrémités, à un point fixe (1) et avec l'autre extrémité à une deuxième (7) et une troisième barre (10), cette troisième barre (10) étant suspendue à son autre extrémité, dans son point de jonction (11), excentriquement de la disque à manivelle (12), l'extrémité libre de la seconde barre (7) étant reliée à un levier (14) tournant autour d'un autre point fixe (2), caractérisé en ce que cet autre point fixe divise le levier (14) en deux sections (8, 9) dont l'extrémité d'une section (9) est articulée autour d'un reservoir d'énergie (15) et l'extrémité (4) de l'autre section (8) autour d'une extrémité de la seconde barre (7), cette barre (7) formant un des organes pour la transmission du mouvement rotatif de la disque à manivelle (12) en un mouvement basculant cyclique du levier (14) tournant autour de l'autre point fixe (2) de façon que la ligne d'action de la force agissant entre le réservoir d'énergie (15) et de ladite une section (9) du levier présente une distance variable (a) dudit point fixe (2).

2. Dispositif de transmission de force selon la revendication 1, caractérisé en ce que l'autre point fixe (2) divise le levier (14) en deux sections (8, 9) de longueur différente, l'extrémité (5) de la section mineure (9) étant articulée autour du réservoir d'énergie (15) et l'extrémité de la section majeure (8) autour d'une des extrémités de la seconde barre (7).

3. Dispositif de transmission de force selon la revendication 1, caractérisé en ce que les deux première et seconde barres (6, 7) articulées autour de la troisième barre (10) constituent une articulation de genouillère qui, pendant le changement de sa position allongée en sa position angulaire, assiste à la transmission de la force à partir du réservoir d'énergie (15) à la disque à manivelle (12).

4. Dispositif de transmission de force selon la revendication 1, caractérisé en ce qu'au moins une disque à manivelle (12) est prévue, à commande de la première barre (6), du levier (14) et de la troisième barre (10), deux ou plus disques à manivelle agissant sur une prise de force commune (19) (figs. 6, 7)

5. Dispositif de transmission de force selon la revendication 1, caractérisé en ce que plusieurs de disques à manivelle (12), chacune d'elles actionnée de ses propres barres (6, 10) et levier (14), sont reliées entre elles et commandent une prise de force commune. (figs. 4, 5)

6. Dispositif de transmission de force selon la revendication 1, caractérisé en ce que plusieurs disques à manivelle (12), chacune d'elles actionnée de ses propres barres (6, 10) et levier (14), commandent un tambour (31) le dit tambour agissant sur une prise de force. (fig. 8)

7. Dispositif de transmission de force selon la revendication 1, caractérisé en ce que sur une face de la disque à manivelle (12) sont articulés au moins deux éléments de mécanisme, chacun composé de la première et troisième barre (6, 10) et du levier (14). (figs. 3, 10)

8. Dispositif de transmission de force selon la revendication 1, caractérisé en ce que sur une face de la disque à manivelle (12) sont disposés deux éléments de mécanisme, chacun comportant une première barre (6), une troisième barre (10) et deux leviers (14). (fig. 11)

**Claims**

1. Force transmission system, consisting of a crank wheel (12), connecting rods (6, 7, 10) and a lever (14), a first one (6) of said rods being connected at one end to a fixed point (1) and at its other end commonly to a second one (7) of said rods and to a third rod (10), said third rod (10), or its junction located at its other end, being supported excentrically by the crank wheel (12), and the free end of the second rod (7) being linked to a lever (14) rotating about another fixed point (12), characterized in that said other fixed point (2) divides the lever (14) into two parts (8, 9), the end (5) of the one part (9) being linked to an energy storage device (15) and the end (4) of the other part (8) to the one end of the second rod (7), and that said rod (7) forms one of the organs for transmitting the rotational movement of the crank wheel (12) into a cyclic oscillating movement of the lever (14) rotating about said other fixed point (2) such that the line of action of the force acting between the energy storage device (15) and the one lever part (9) has a variable distance (a) from said fixed point (2).

2. Force transmission system according to claim 1, characterized in that the other fixed point (2) divides the lever (14) into two parts (8, 9) of unequal length, the end (5) of the shorter part (9) being linked to the energy storage device (15) and the end (4) of the longer part to the one end of the second rod (7).

3. Force transmission system according to claim 1, characterized in that the first and the second rod (6, 7) which both are linked to the third rod (10) from a toggle joint which during the transition from the stretched into the angled position supports the flow of energy from the energy storage device (15) to the crank wheel (12).

4. Force transmission system according to claim 1, characterized in that at least one crank wheel (12) actuated by the first rod (6), by the lever (14) and by the third rod (10) is provided, whereby two or more crank wheels work on a common power take-off (19). (Figs. 6, 7)

5. Force transmission system according to claim 1, characterized in that several crank wheels (12) are connected to each other and work on one common power take-off, each crank wheel being actuated by its appropriate rods (6, 10) and levers (14). (Figs. 4, 5)

6. Force transmission system according to claim 1, characterized in that several crank wheels (12) work onto a hollow cylinder (31) operating a power take-off, each crank wheel being actuated by its appropriate rods (6, 10) and levers. (Fig. 8)

7. Force transmission system according to claim 1, characterized in that at least two force transmission elements are linked to one side of the crank wheel (12), each element consisting of the first and third rod (6, 10) and of the lever (14). (Figs. 3, 10)

8. Force transmission system according to claim 1, characterized in that on one side of the crank wheel (12) two force transmission elements are arranged, each one comprising a first rod (6), a third rod (10) and two levers (14). (Fig. 8)

Fig. 2

Fig. 1

Fig. 3

# Fig. 4

# Fig. 5

Fig. 6

Fig. 7

3

Fig. 8

Fig. 9

Fig. 10

Fig.11